# EUROPÄISCHE PATENTSCHRIFT

(11) **EP 1 295 817 B1**
(45) Veröffentlichungstag und Bekanntmachung des Hinweises auf die Patenterteilung: **20.10.2004**
(21) Anmeldenummer: 02450174.4
(22) Anmeldetag: 08.08.2002
(51) Int. Cl.: B65G 21/04, B65G 21/22, B65G 39/20

(54) **Förderanlage**
Conveyor
Convoyeur

(30) Priorität: 20.09.2001 AT 15012001
(43) Veröffentlichungstag der Anmeldung: 26.03.2003
(73) Patentinhaber: Innova Patent GmbH, 6960 Wolfurt (AT)
(72) Erfinder: Trieb, Herbert, 6922 Wolfurt (AT)
(74) Vertreter: Atzwanger, Richard, Dipl.-Ing. Patentanwalt

(56) Entgegenhaltungen:
- AT-B- 405 818
- DE-A- 3 426 106
- DE-C- 3 504 995
- FR-A- 1 524 060
- GB-A- 291 917

## Beschreibung

Die gegenständliche Erfindung betrifft eine Förderanlage zum Transport von Gütern mit einem Förderband, an welchem quer zu dessen Bewegungsrichtung ausgerichtete Tragbalken befestigt sind und mit zwei in vertikalem Abstand voneinander angeordneten, durch jeweils zwei Tragseile gebildeten Tragbahnen, längs welcher an den seitlichen Enden der Tragbalken angeordnete Laufrollen verfahrbar sind, wobei die Tragseile durch eine Mehrzahl von Halterahmen miteinander verbunden sind, welche mit zwei zumindest angenähert vertikal ausgerichteten Balken und zumindest zwei diese miteinander verbindenden, zumindest angenähert horizontal ausgerichteten Streben ausgebildet sind.

Aus der EP-A2-745 545, der GB-A-291 917, der DE-C1-35 04 995 und der DE-A1-34 26 106 sind Förderanlagen bekannt, welche längs deren Verlaufes mit Halterahmen ausgebildet sind, innerhalb welcher die Tragseile und die beiden Trume des Förderbandes längs Schienen oder längs Tragseilen geführt sind und durch welche die Tragseile in ihrer Lage gehalten sind. Eine Verbindung der Tragseile miteinander ist deshalb erforderlich, um bei der Einwirkung von starken Windkräften zu gewährleisten, daß die Tragseile zueinander die richtige Lage beibehalten, um Entgleisungen der Laufrollen von den Tragseilen zu vermeiden. Obgleich durch derartige Halterahmen die Tragseile in ihrer gegenseitigen Lage gehalten werden, wird jedoch dabei nicht verhindert, daß infolge von starken auf das Förderband einwirkenden Windkräften die Laufrollen von den Tragseilen abgehoben werden, wodurch gleichfalls Entgleisungen verursacht werden können.

Der gegenständlichen Erfindung liegt somit die Aufgabe zugrunde, Maßnahmen vorzusehen, durch welche eine Führung der Laufrollen auf den Tragseilen gewährleistet wird. Dies wird erfindungsgemäß dadurch erzielt, daß an den zumindest angenähert horizontalen Streben Führungseinrichtungen für das Förderband angeordnet sind, welche auf das Förderband von oben her anliegen, wobei sie insbesondere auf die freien oberen Enden von Wellkanten des Förderbandes anliegen, um Entgleisungen der Laufrollen zu verhindern.

Vorzugsweise ist weiters an den Halterahmen eine Abdeckung befestigt bzw, ist an den Halterahmen ein das Förderband zumindest mehrseitig umschließendes Gehäuse befestigt. Weiters können die Halterahmen mittels Klemmen an den Tragseilen befestigt sein, wobei die Klemmen mit einer Einrichtung zur Klemmkraftverstärkung ausgebildet sind. Hierfür sind vorzugsweise die Klemmen mit zwei gegeneinander verschwenkbaren Klemmbacken ausgebildet, welche jeweils mit einer kegeligen, gewölbten oder abgeschrägten Fläche ausgebildet sind und welchen Traglaschen zugeordnet sind, welche mit gewölbten Flächen ausgebildet sind, wodurch bei einer Belastung der Traglaschen die Anpressung der Klemmbacken an die Tragseile verstärkt wird.
Weiters ist vorzugsweise oberhalb des oberen Paares der Tragseile mindestens ein weiteres Seil vorgesehen, welches gleichfalls mit den Halterahmen verbunden ist.

Der Gegenstand der Erfindung ist nachstehend anhand eines in der Zeichnung dargestellten Ausführungsbeispiels näher erläutert. Es zeigen:

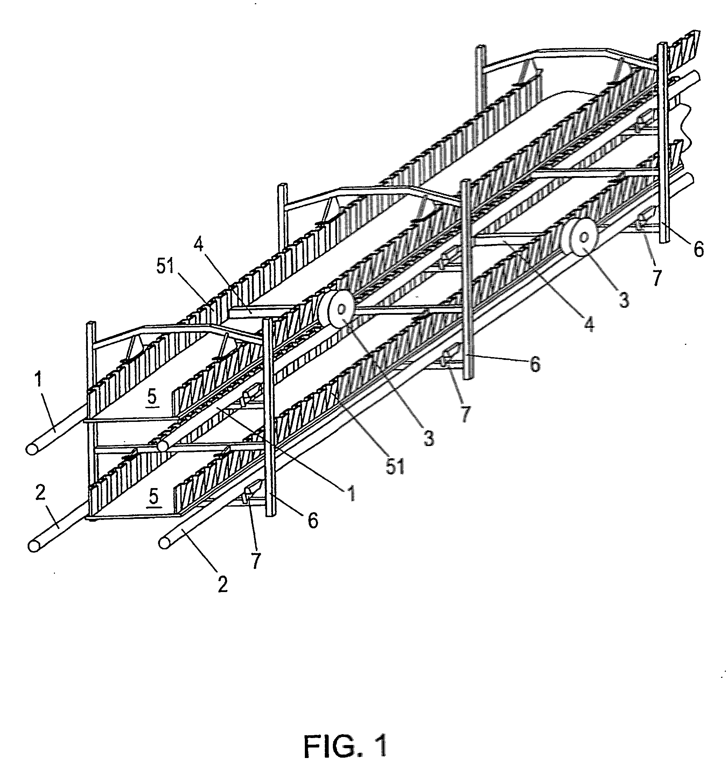

- Fig.1: einen Teil einer erfindungsgemäßen Anlage, in axonometrischer Darstellung;
- Fig.2: die Anlage gemäß der Fig.1, in Vorderansicht;
- Fig.3: die Anlage gemäß Fig. 1, in Seitenansicht;
- Fig.4: eine Befestigungsklemme, in Seitenansicht; und
- Fig.4a: die Befestigungsklemme gemäß Fig.4, im Schnitt, nach Linie IV-IV.

Eine erfindungsgemäße Anlage weist zwei Paare von in vertikalem Abstand voneinander an den Enden der Anlage über Traggerüste geführten und verankerten Tragseilen 1 und 2 auf, längs welcher mittels Laufrollen 3, welche an den seitlichen Enden von Tragbalken 4 gelagert sind, ein in sich geschlossenes Förderband 5 bewegbar ist. Das Förderband 5 ist an den Unterseiten der Tragbalken 4 befestigt. Längs seiner Seitenränder ist das Förderband 5 mit Wellkanten 51 ausgebildet, welche dafür erforderlich sind, um es in den beiden Endstationen der Anlage über Umlenktrommeln führen zu können. Eine derartige Anlage ist aus dem Stand der Technik bekannt.

Um die für einen störungsfreien Betrieb einer derartigen Anlage erforderliche Lagestabilität der Tragseile 1 und 2 zueinander zu gewährleisten, sind an den Tragseilen 1 und 2 voneinander in Abständen angeordnete Halterahmen 6 mittels Klernmen 7 befestigt, durch welche die Tragseile 1 und 2 in festen Abständen zueinander gehalten sind. Da das Förderband 5 in den Endbereichen, in welchen es umgelenkt wird, mittels einer Wendeeinrichtung um 180° gewendet wird, sind beide Trume desselben nach oben gerichtet.

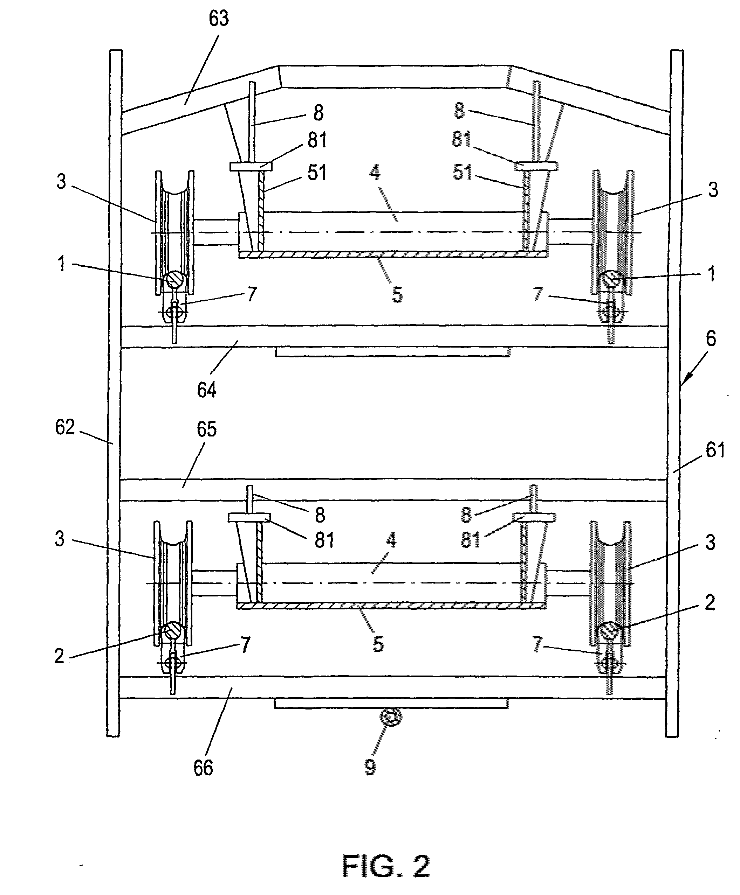

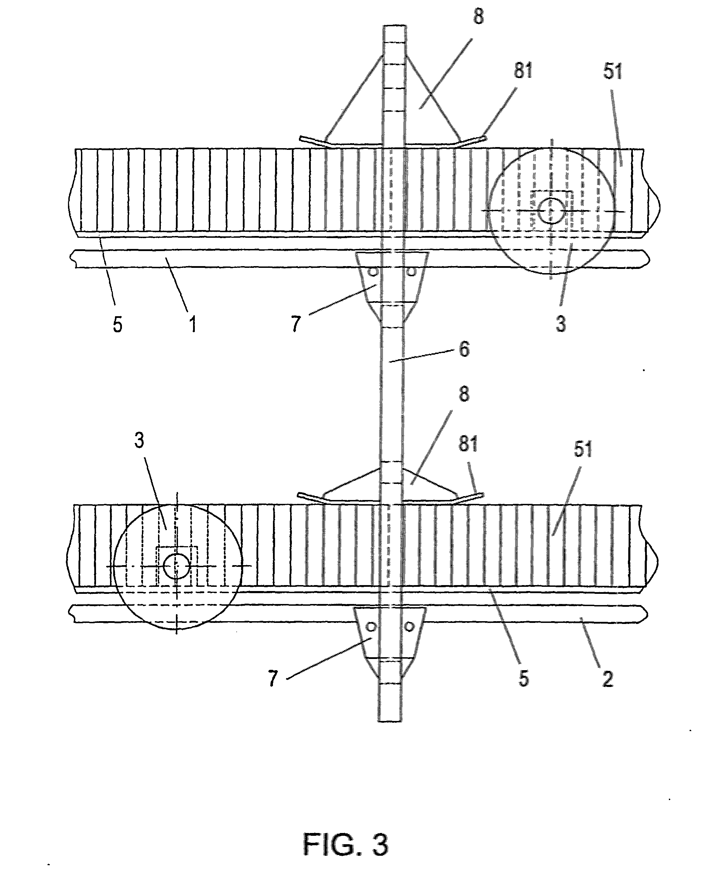

Wie dies aus den Fig. 2 und Fig. 3 ersichtlich ist, bestehen die Halterahmen 6 aus vertikalen Balken 61 und 62, welche durch angenähert horizontale Streben 63, 64, 65 und 66 miteinander verbunden sind. Die Befestigung der Halterahmen 6 an den Tragseilen 1 und 2 erfolgt mittels Klemmen 7, an welchen die Streben 64 und 66 befestigt sind. Von den Streben 63 und 65 ragen nach unten Träger 8 für Leitflächen 81 ab, welche an die oberen Stirnflächen der Wellkanten 51 anliegen und welche zur Lagehaltung der Wellkanten 51 dienen, um Entgleisungen der Laufrollen 3 zu verhindern.

Durch die Halterahmen 6 sind die Tragseile 1 und 2 voneinander in den vorgegebenen vertikalen und horizontalen Abständen gehalten, wodurch unter jeglichen Betriebsbedingungen eine störungsfreie Bewegung des Förderbandes 5 gewährleistet ist. An den Halterahmen 6 kann weiters auch eine Abdeckung oder eine Einhausung für die Anlage angeordnet werden. Zudem können die Halterahmen 6 auch als Träger für Leitungen 9 u.dgl. dienen.

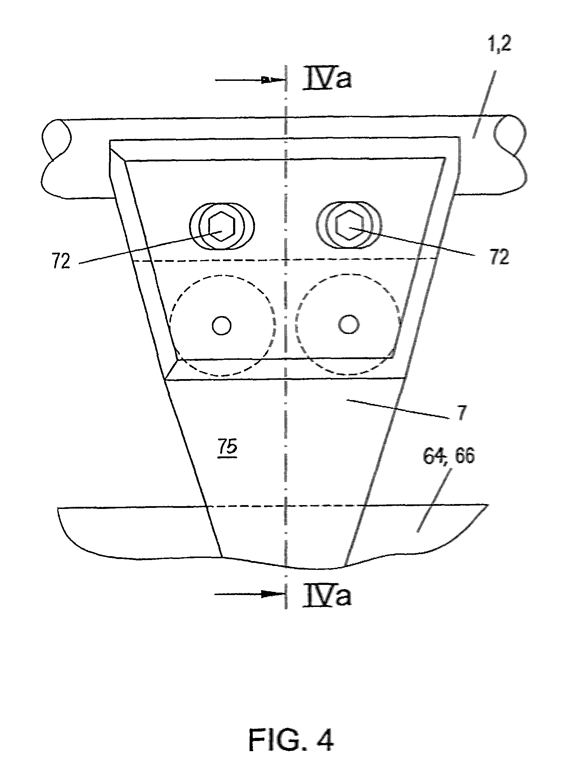

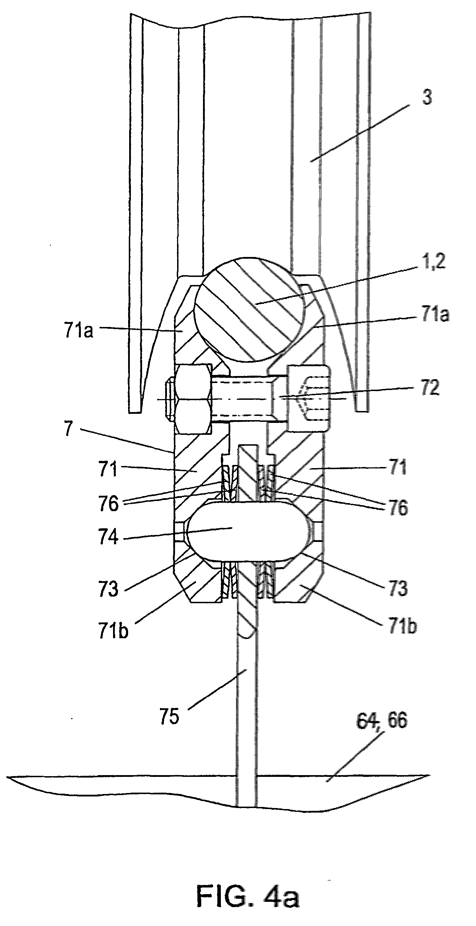

Nachstehend sind anhand der Fig. 4 und 4a die Ausbildung und Funktion der Klemmen 7 erläutert. Die Klemmen 7 bestehen aus zwei Klemmbacken 71, deren obere Teile 71a an die Tragseile 1, 2 anliegen. Da jedoch auf den Tragseilen 1, 2 die Laufrollen 3 abrollen, dürfen die Klemmbacken 71 nur an die Seitenflächen der Tragseile 1, 2 anliegen. Unterhalb der oberen Teile 71a der Klemmbacken 71 sind diese mittels zweier Bolzen 72 miteinander derart verbunden, sie um eine in Richtung des Tragseiles 1, 2 verlaufende Achse gegeneinander geringfügig verschwenkbar sind.

In ihrem unteren Bereich 71b sind in den Klemmbacken 71 Ausnehmungen 73 vorgesehen, welche an ihrer Unterseite mit kegeligen, gewölbten oder schrägen Flächen ausgebildet sind. In diesen Ausnehmungen 73 befinden sich Tragkörper 74, welche mit kugelförmigen Flächen ausgebildet sind und an welchen mit den Streben 64 und 66 verbundene Traglaschen 75 befestigt sind. Zudem sind zwischen den Traglaschen 75 und den Klemmbacken 71 zwei Gruppen von Tellerfedem 76 angeordnet, durch welche die oberen Teile 71a der Klemmbacken 71 an die Tragseile 1, 2 angepreßt werden. Durch diese Tellerfedern 76 werden Änderungen im Durchmesser der Tragseile 1 und 2 aufgenommen.

Sobald durch die Halterahmen 6 über die Traglaschen 75 auf die Tragkörper 74 eine Zugkraft ausgeübt wird, werden die unteren Bereiche 71b der Klemmbacken 71 noch weiter auseinander gespreizt, wodurch die durch die oberen Backenteile 71a auf die Tragseile 1, 2 ausgeübte Klemmkraft erhöht wird. Hierdurch wird gewährleistet, daß bei einer verstärkten Belastung der Klemmen 7 durch die Tragrahmen 6 ein Lösen der Klemmen 7 von den Tragseilen 1, 2 verhindert wird.

Durch die mit den Führungsflächen 81 ausgebildeten Halterahmen 6 wird ein Entgleisen der Laufrollen 3 mit Sicherheit vermieden. Zudem können die Halterahmen 6 als Träger für eine Abdeckung oder ein Einbausung sowie für Kabel, Rohre od.dgl. dienen.
Zur Erhöhung der Tragkraft kann noch mindestens ein weiteres Seilpaar vorgesehen sein, welches sich oberhalb der Tragseile 1 befindet und an welchem die Tragrahmen 6 gleichfalls befestigt sind. Durch dieses weitere Seilpaar kann ein Teil der Lasten aufgenommen werden. Zudem wird durch dieses Seilpaar eine weitere Lagestabilisierung der Tragseile bewirkt. Schließlich kann dieses weitere Seilpaar als Träger für eine Abdeckung bzw. für eine Einhausung dienen.

## Patentansprüche

1. Förderanlage zum Transport von Gütern, mit einem Förderband (5), an welchem quer zu dessen Bewegungsrichtung ausgerichtete Tragbalken (4) befestigt sind und mit zwei in vertikalem Abstand voneinander angeordneten, durch jeweils zwei Tragseile (1, 2) gebildeten Tragbahnen, längs welcher an den seitlichen Enden der Tragbalken (4) angeordnete Laufrollen (3) verfahrbar sind, wobei die Tragseile (1, 2) durch eine Mehrzahl von Halterahmen (6) miteinander verbunden sind, welche mit zwei zumindest angenähert vertikal ausgerichteten Balken (61, 62) und zumindest zwei diese miteinander verbindenden, zumindest angenähert horizontal ausgerichteten Streben (64, 66) ausgebildet sind, **dadurch gekennzeichnet, daß** an weiteren zumindest angenähert horizontalen Streben (63, 65) Führungseinrichtungen (8, 81) für das Förderband (5) angeordnet sind, welche auf das Förderband (5) von oben her anliegen, wobei sie insbesondere auf die freien oberen Enden von Wellkanten (51), die längs der Seitenränder des Förderbandes (5) ausgebildet sind, anliegen, um Entgleisungen der Laufrollen (3) zu verhindern.

2. Förderanlage nach Patentanspruch 1, **dadurch gekennzeichnet, daß** an den Halterahmen (6) eine Abdeckung befestigt ist.

3. Förderanlage nach einem der Patentansprüche 1 und 2, **dadurch gekennzeichnet, daß** an den Halterahmen (6) ein das Förderband (5) zumindest mehrseitig umschließendes Gehäuse befestigt ist.

4. Förderanlage nach einem der Patentansprüche 1 bis 3, **dadurch gekennzeichnet, daß** die Halterahmen (6) mittels Klemmen (7) an den Tragseilen (1, 2) befestigt sind, wobei die Klemmen (7) mit einer Einrichtung zur Klemmkraftverstärkung ausgebildet sind.

5. Förderanlage nach Patentanspruch 4, **dadurch gekennzeichnet, daß** die Klemmen (7) mit zwei gegeneinander verschwenkbaren Klemmbacken (71) ausgebildet sind, welche jeweils mit einer kegeligen, gewölbten oder abgeschrägten Fläche ausgebildet sind und welchen Traglaschen (75) zugeordnet sind, welche mit gewölbten Flächen (74) ausgebildet sind, wodurch bei einer Belastung der Traglaschen (75) die Anpressung der Klemmbacken (71) an die Tragseile (1, 2) verstärkt wird.

6. Förderanlage nach einem der Patentansprüche 1 bis 5, **dadurch gekennzeichnet, daß** oberhalb des oberen Paares der Tragseile (1) mindestens ein weiteres Seil vorgesehen ist, welches gleichfalls mit den Halterahmen (6) verbunden ist.

## Claims

1. A conveyor system for transporting goods, having a conveyor belt (5), to which supporting beams (4) which are oriented transversely with respect to its direction of movement are attached, and having two supporting tracks arranged at a vertical distance from one another and each formed by two carrying cables (1, 2), along which tracks rollers (3) which are arranged at the lateral ends of the supporting beams (4) may be moved, the carrying cables (1, 2) being connected together by a plurality of holding frames (6), which comprise two at least approximately vertically oriented beams (61, 62) and at least two at least approximately horizontally oriented struts (64, 66) connecting these together, **characterised in that** guide means (8, 81) for the conveyor belt (5) are arranged on further at least approximately horizontal struts (63, 65), which guide means (8, 81) bear from above on the conveyor belt (5), wherein they bear in particular on the free upper ends of corrugated sidewalls (51), which are constructed along the side edges of the conveyor belt (5), to prevent the rollers (3) from derailing.

2. A conveyor system according to claim 1, **characterised in that** a cover is attached to the holding frames (6).

3. A conveyor system according to one of claims 1 and 2, **characterised in that** a housing enclosing the conveyor belt (5) at least on a plurality of sides is attached to the holding frames (6).

4. A conveyor system according to one of claims 1 to 3, **characterised in that** the holding frames (6) are attached to the carrying cables (1, 2) by means of clamps (7), wherein the clamps (7) are provided with a means for increasing clamping force.

5. A conveyor system according to claim 4, **characterised in that** the clamps (7) are provided with two clamping jaws (71) pivotable towards one another, which each comprise a conical, curved or bevelled surface and with which carrying brackets (75) are associated, which are provided with curved surfaces (74), whereby the contact pressure of the clampirg jaws (71) against the carrying cables (1, 2) is increased upon loading of the carrying brackets (75).

6. A conveyor system according to one of claims 1 to 5, **characterised in that** at least one further cable is provided above the upper pair of carrying cables (1), which cable is likewise connected with the holding frames (6).

## Revendications

1. Convoyeur pour le transport de produits, comprenant une bande transporteuse (5) à laquelle sont fixées des poutres (4) transversales par rapport au sens de déplacement de ladite bande (5), et deux voies de support qui sont espacées verticalement l'une de l'autre, qui sont définies chacune par deux câbles porteurs (1, 2) et le long desquelles des galets (3) disposés sur les extrémités latérales des poutres (4) sont mobiles, les câbles porteurs (1, 2) étant reliés entre eux par plusieurs cadres de fixation (6) qui se composent de deux barres (61, 62) au moins approximativement verticales et d'au moins deux entretoises (64, 66) au moins approximativement horizontales qui relient lesdites barres (61, 62),
**caractérisé en ce qu'**il est prévu pour la bande transporteuse (5), sur d'autres entretoises (63, 65) au moins approximativement horizontales, des dispositifs de guidage (8, 81) qui sont appliqués sur ladite bande transporteuse (5) par le haut, ces dispositifs de guidage (8, 81) étant appliqués en particulier sur les extrémités supérieures libres de bords ondulés (51) qui sont formés le long des bords latéraux de la bande transporteuse (5), afin d'empêcher des déraillements des galets (3).

2. Convoyeur selon la revendication 1, **caractérisé en ce qu'**un recouvrement est fixé aux cadres (6).

3. Convoyeur selon l'une des revendications 1 et 2, **caractérisé en ce qu'**un carter qui entoure la bande transporteuse (5) sur au moins plusieurs côtés est fixé aux cadres (6).

4. Convoyeur selon l'une des revendications 1 à 3, **caractérisé en ce que** les cadres (6) sont fixés aux câbles porteurs (1, 2) à l'aide de pinces (7), ces pinces (7) étant pourvues d'un dispositif pour renforcer la force de serrage.

5. Convoyeur selon la revendication 4, **caractérisé en ce que** les pinces (7) sont pourvues de deux mâchoires de serrage (71) qui sont aptes à pivoter l'une par rapport à l'autre, qui présentent chacune une surface sphérique, bombée ou biseautée et auxquelles sont associées des pattes de support (75) pourvues de surfaces bombées (74), ce qui renforce la pression des mâchoires (71) contre les câbles porteurs (1, 2) lorsque lesdites pattes de support (75) sont contraintes.

6. Convoyeur selon l'une des revendications 1 à 5, **caractérisé en ce qu'**il est prévu au-dessus de la paire supérieure de câbles porteurs (1) au moins un autre câble, qui est relié lui aussi au cadre de fixation (6).
